# EUROPEAN PATENT APPLICATION

(11) **EP 4 838 430 A1**
(43) Date of publication of application: **11.11.2026**
(21) Application number: 25175449.5
(22) Date of filing: 09.05.2025
(51) Int. Cl.: G06N 20/00, G06N 3/045

(54) **ACTIVELY TESTING MACHINE LEARNING MODEL PERFORMANCE USING FOUNDATION MODELS**

(71) Applicant: Siemens Aktiengesellschaft, 80333 München (DE)
(72) Inventor: Decker, Thomas, 85716 Unterschleißheim (DE); Köbler, Alexander, 81825 München (DE); Thon, Ingo, 85630 Grasbrunn (DE)
(74) Representative: Siemens Patent Attorneys

(57) **Abstract**

The present disclosure provides a computer-implemented method (100) for actively testing and estimating the performance of a machine learning model in industrial environments. The method includes receiving input data without labels (110) and processing it using a machine learning (ML) model (102) to generate predictions (120). Reference data with labels (112) is received and embeddings are generated for both the reference data and input data using a foundation model (103). Shifts in data distribution are detected (105) by comparing the embeddings. The performance of the ML model (102) is estimated (106) based on the detected shifts and stored embeddings. Specific instances from the input data are selected (106) for labeling to improve the performance estimate. A labeling query (124) is generated for these instances, labels (126) are received in response, and the performance estimate is updated. Information is output when the performance estimate falls below a given threshold value.

## Description

The present disclosure relates to performance monitoring of machine learning models in industrial environments, and more particularly to a system and method for actively testing and estimating the performance of deployed machine learning models using foundation models and limited labeling.

Machine learning models have become increasingly prevalent in industrial environments for tasks such as predictive maintenance, quality control, and process optimization. These models are typically trained on historical data and then deployed to make predictions on new, incoming data. However, the performance of deployed models can degrade over time due to changes in the underlying data distribution, a phenomenon known as concept drift.

Monitoring and evaluating the performance of deployed machine learning models is crucial for maintaining their reliability and effectiveness. Having a trustworthy estimate of the correctness of the model's output allows users to calibrate their trust in the model's output and handle generated results appropriately. By all of this, it is not sufficient to estimate the performance of the system at deployment, as changes in the environment during operations can worsen the system's performance. Traditional approaches often rely on periodically retraining models on newly collected labeled data or comparing model predictions to a held-out test set. However, these methods can be resource-intensive and may not detect performance degradation in a timely manner.

Prominent examples of machine learning based systems that need to be monitored are any systems that in turn monitor other processes. These include condition monitoring systems, where changes in the environment, such as the installation of a new machine in the proximity of the system inducing vibrations, can affect the performance of the monitoring system, or visual quality inspection, where changes in lighting can reduce the accuracy of the model in detecting damaged products. In both cases, the requirements for the performance of those systems are high, as undetected machine or product damage can result in downstream costs. To avoid this, once preset requirements on the performance are not met anymore, immediate actions have to be taken. This can be done by an alternative process that takes over, e.g., manual inspection, or an adaptation of the ML system.

Active testing deals with reducing the number of labels required to yield a reliable estimate of the model's performance under an existing but limited labeling budget. A variety of methods have been developed to approach this task analog to active learning by introducing different sampling strategies to query and label test samples. Kossen et al proposes in his article "Active testing: Sample efficient model evaluation." (International Conference on Machine Learning, pages 5753-5763. PMLR) a framework for efficiently estimating the performance of machine learning models on unlabeled data by actively selecting the most informative instances for labeling, using techniques like importance sampling and uncertainty quantification. In a further article "Active surrogate estimators: An active learning approach to label-efficient model evaluation". (in Advances in Neural Information Processing Systems, 35:24557-24570) a surrogate model is used to estimate the performance of a target model on unlabeled data, actively selecting informative samples for labeling to improve the accuracy of the performance estimate while minimizing labeling costs.

Existing approaches which want to measure the actual performance of a deployed model given a probably changed data distribution often require a labeled subset to estimate an empirical distribution of the current data generation process. Those methods include Error Rate-based Methods which trigger an alarm if the error rate of the deployed model exceeds a specified threshold or Statistical Process Control (SPC) calculating the current performance on a set of stochastically gathered and labeled examples during operation. This is impractical for a lot of real-world applications. To acquire a reliable estimation of the current model performance, a sufficiently big subset must be labeled.

Active learning techniques have been developed to selectively query labels for the most informative data points, reducing the overall labeling burden. While these approaches have primarily focused on model training, there is growing interest in applying similar principles to model evaluation and testing. This could potentially allow for more efficient performance estimation with limited labeling resources.

Label-free performance estimation methods have the goal to predict the performance of a machine learning model using only unlabeled data with actual prediction ground truths. For a recent overview of existing approaches see [5], but many of them have very limiting assumptions and are only applicable to specific model types. Moreover, none of them comes with the possibility to improve the estimate using a limited number of labels and none of them uses the power of foundation models.

Recent advances in foundation models, which are large pre-trained models that can be adapted to various downstream tasks, have shown promise in capturing complex data distributions and transferring knowledge across domains. However, leveraging these models for performance monitoring of deployed machine learning systems in industrial settings remains an open challenge.

It has been appreciated that a system is needed that overcomes one or more of these problems.

The named problems have been solved by a computer-implemented method according to the features of claim 1.

Further the problems have been solved by an industrial system comprising the features of claim 11, a computer-program product according to claim 20, a computer-readable medium according to claim 21 and a computer device according to claim 22.

In a first aspect, a computer-implemented method for actively testing and estimating the performance of a machine learning model in industrial environments is provided. The method comprises: receiving input data without labels and processing the input data without labels using a machine learning (ML) model to generate predictions; receiving reference data with labels and generating embeddings for the reference data with labels, using a foundation model; generating embeddings for input data without labels using the foundation model; detecting shifts in data distribution by comparing the embeddings of the input data without labels with the embeddings of the reference data with labels; estimating the performance of the ML model based on the detected shifts and the stored embeddings; selecting specific instances from the input data without labels for which obtaining labels would be most informative for improving the performance estimate; generating a labeling query for the selected specific instances; receiving labels for the selected specific instances in response to the labeling query; updating the performance estimate of the ML model based on the received labels; and outputting of information as soon as performance estimate has fallen below a given threshold value. This method enables continuous monitoring and performance estimation of machine learning models in industrial settings without requiring constant human intervention or large amounts of labeled data. By leveraging foundation models and active testing techniques, it provides a more efficient and accurate way to detect potential performance degradation and trigger necessary interventions.

Embeddings are internal data representation of the foundation. In general, Foundation models generate embeddings by first converting input data (like text or images) into numerical vectors through an embedding layer. These initial embeddings are then processed through multiple transformer layers that capture contextual relationships and patterns in the data. The final embeddings are typically higher-dimensional vectors that represent the semantic meaning of the input, which can be compared using similarity metrics like cosine similarity.

Storing embeddings in a vector database allows for efficient retrieval and comparison of data representations, enabling faster shift detection and performance estimation.

The method may further comprise selecting a subset of the input data without labels for processing by the foundation model either randomly or by using additional information from the Machine learning model.

This selective processing helps reduce computational overhead while maintaining the effectiveness of the performance estimation process.

Detecting shifts in data distribution may comprise applying at least one of a Kolmogorov-Smirnov test, Jensen-Shannon divergence, or Wasserstein distance to compare the embeddings of the input data without labels with the embeddings of the reference data with labels. These statistical methods provide robust ways to quantify distributional changes, allowing for more accurate detection of significant shifts in the input data. Estimating the performance of the ML model may comprise constructing pseudo-labels for the input data without labels using a surrogate model or using transportation-based techniques.

A basic approach for constructing would use k-Nearest-Neighbor classification based on stored embeddings to assign pseudo-labels by looking at labels of the most similar embeddings in the vector database. More advanced strategies use surrogate models based on Bayesian Neural Networks or Deep Ensembles. These models are trained on available labeled data and can predict labels for unlabeled points while providing uncertainty estimates. The surrogate models are adaptively refined as new labels are acquired, improving pseudo-label accuracy over time. Transportation-based techniques could also be used to match distributions between labeled and unlabeled data using optimal transport.

The use of pseudo-labels enables performance estimation even in the absence of true labels, making the method more applicable in real-world scenarios where obtaining labels is costly or time-consuming.

Selecting specific instances for labeling may comprise identifying instances with low prediction quality under estimated pseudo-labels. This can be achieved by computing suitable performance measures for the predictions of all input instances when compared to the pseudo-labels, such as the cross-entropy loss in classification problems or the mean squared error in regression tasks, and selecting the samples with the highest loss value. An alternative way to select such instances might be based on the uncertainty in the estimated pseudo-labels, which is high for instances where multiple contradictory pseudo-labels are allocated.

This targeted selection ensures that the most informative instances are chosen for labeling, maximizing the impact of human intervention on improving the performance estimate.

The method may further comprise interfacing with a copilot to facilitate the labeling query and receipt of labels.

Integrating a copilot into the process streamlines the interaction between the system and human operators, making the labeling process more efficient and user-friendly.

Interfacing with the industrial copilot may further comprise providing, via the copilot, additional context or guidance to a human operator for responding to the labeling query. This additional context and guidance helps human operators make more informed decisions when providing labels, potentially improving the quality of the labels received. The foundation model may be selected based on the data modality of the input data without labels.

Selecting an appropriate foundation model ensures that the generated embeddings accurately capture the relevant features of the input data, leading to more reliable shift detection and performance estimation. The foundation model may be a time series foundation model for processing industrial sensor data.

Using a specialized time series foundation model for industrial sensor data allows for better handling of temporal dependencies and patterns specific to industrial environments.

In a second aspect, an industrial system for active performance estimation is provided. The system comprises: a machine learning (ML) model configured to process input data without labels to generate predictions; a foundation model configured to generate embeddings for both the input data without labels and reference data with labels; a shift detection module configured to detect shifts in data distribution by comparing the embeddings of the input data without labels with the embeddings of the reference data with labels; an active testing module configured to estimate performance of the ML model based on the detected shifts and the stored embeddings, select specific instances from the input data without labels for which obtaining labels would be most informative for improving the performance estimate, generate a labeling query for the selected specific instances, update the performance estimate of the ML model based on labels received in response to the labeling query, and output information as soon as performance estimate has fallen below a given threshold value.

This system provides a comprehensive solution for monitoring and estimating the performance of machine learning models in industrial environments, integrating various components to enable efficient and accurate performance assessment with minimal human intervention.

The system may further comprise a vector database configured to store the generated embeddings.

The inclusion of a vector database enhances the system's ability to efficiently manage and retrieve embeddings, supporting faster data processing and analysis.

The system may further comprise an instance selection module configured to select a subset of the input data without labels for processing by the foundation model, either randomly or by using additional information from the Machine learning model.

This module helps optimize resource utilization by focusing on the most relevant or informative data points for performance estimation.

The shift detection module may be further configured to apply at least one of a Kolmogorov-Smirnov test, Jensen-Shannon divergence, or Wasserstein distance computation to compare the embeddings of the input data without labels with the embeddings of the reference data with labels. These statistical methods enable the system to quantify and detect significant changes in data distribution more accurately.

The active testing module may be further configured to construct pseudo-labels for the input data without labels using a surrogate model or using transportation-based techniques. This allows the system to estimate performance even when true labels are not available, increasing its applicability in real-world industrial settings.

The system may further comprise an industrial copilot configured to facilitate the labeling query and receipt of labels. The copilot enhances the system's usability by providing a user-friendly interface for human operators to interact with the labeling process.

The industrial copilot may be further configured to provide additional context or guidance to a human operator for responding to the labeling query. This feature improves the quality of human input by providing operators with relevant information to make more informed labeling decisions.

The foundation model may be selected based on the data modality of the input data without labels. The flexibility in model selection ensures that the system can effectively handle various types of industrial data, from sensor readings to visual inspection data.

The foundation model may be a time series foundation model for processing industrial sensor data.

Specializing in time series data allows the system to better capture temporal patterns and dependencies common in industrial sensor data, leading to more accurate performance estimation.

In a third aspect, a computer program comprising instructions which, when executed by a computer, cause the computer to carry out the method of the first aspect is provided. This computer program enables the implementation of the active testing and performance estimation method on various computing devices, facilitating widespread adoption in industrial settings.

In a fourth aspect, a computer-readable medium comprising instructions which, when executed by a computer, cause the computer to carry out the method of the first aspect is provided. This computer-readable medium allows for easy distribution and deployment of the active testing and performance estimation method across different industrial systems and environments.

In a fifth aspect, a computer device comprising a processor and a memory, wherein the memory comprises instructions stored thereon which, when executed by the processor, causes the computer device to perform the method of the first aspect is provided.

This integrated computer device offers a standalone solution for implementing the active testing and performance estimation method, making it easier for industrial users to adopt and integrate the technology into their existing infrastructure.

### BRIEF DESCRIPTION OF FIGURES

Embodiments of the invention will be described, by way of example, with reference to the following drawings, in which:
FIG. 1 illustrates a block diagram of an Instance Selection system for active performance estimation of a machine learning model, according to aspects of the present disclosure.
FIG. 2 illustrates a block diagram of an industrial plant incorporating an active performance estimation system for machine learning models, in accordance with example embodiments.

Common reference numerals are used throughout the figures to indicate similar features.

The present disclosure relates to systems and methods for actively testing and estimating the performance of machine learning models in industrial environments. Machine learning models are increasingly deployed in various industrial applications to improve efficiency, quality control, and decision-making processes. However, the performance of these models can degrade over time due to changes in the operating environment or input data distribution. This degradation may lead to unreliable predictions and potentially costly errors in industrial processes.

To address this challenge, the disclosed systems and methods provide a novel approach for continuously monitoring and estimating the performance of deployed machine learning models. This approach combines the power of foundation models, which are large pre-trained models capable of generating useful representations of data, with active testing techniques to efficiently estimate model performance with minimal human intervention.

The systems and methods described herein enable the detection of shifts in data distribution, which may indicate potential performance degradation. By leveraging foundation models to generate embeddings of both labeled reference data and unlabeled input data, the system can compare these representations to identify changes in the data distribution.

As used herein, the term "embeddings" refers to dense vector representations of data in a lower-dimensional space. These vectors capture semantic or contextual information about the input data, allowing for efficient comparison and analysis. Embeddings can be generated for various types of data, including but not limited to text, images, time series, or sensor readings. In the context of machine learning and foundation models, embeddings are typically learned representations that encode complex features and relationships within the data, enabling more effective processing, similarity comparisons, and downstream tasks.

Furthermore, the disclosed approach incorporates active testing techniques to selectively query for labels on specific data instances. This selective labeling process allows for a more accurate performance estimation while minimizing the need for extensive manual labeling, which can be time-consuming and costly in industrial settings.

The systems and methods described in this disclosure offer several advantages for industrial applications. They provide a means to continuously monitor model performance, detect potential issues early, and maintain the reliability of machine learning-based systems in dynamic industrial environments. This approach can help industrial operators make informed decisions about when to retrain or update their models, ultimately improving the overall efficiency and reliability of their processes.

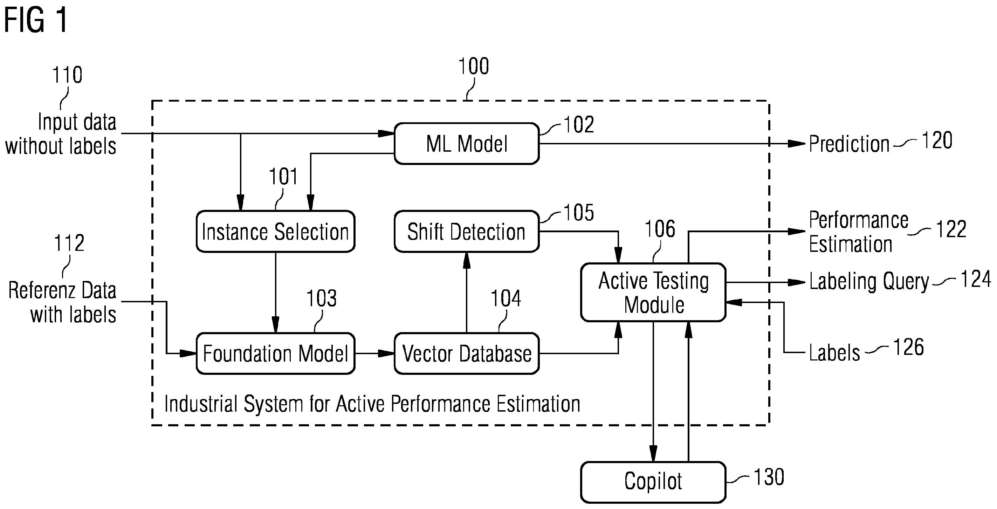

The Industrial System for Active Performance Estimation 100 comprises several interconnected components designed to monitor and evaluate the performance of machine learning models in industrial settings. FIG. 1 illustrates a block diagram of the system 100, showcasing its main components and their relationships.

A Machine Learning (ML) model 102 forms a central part of the system 100. The ML model 102 is configured to process input data without labels 110 and generate predictions 120 based on this data. These predictions 120 are used in various industrial applications, such as quality control or process optimization.

To enhance the system's ability to assess the ML model's performance over time, a foundation model 103 is incorporated. The foundation model 103 is configured to generate embeddings for both the input data without labels 110 and reference data with labels 112. These embeddings serve as compact, meaningful representations of the data, allowing for efficient comparison and analysis.

A vector database 104 is included in the system 100 to store the embeddings generated by the foundation model 103. This storage mechanism enables quick retrieval and comparison of data representations, facilitating efficient performance estimation.

The system 100 also includes a shift detection module 105. This module is configured to detect shifts in data distribution by comparing the embeddings of the input data without labels 110 with the embeddings of the reference data with labels 112 stored in the vector database 104. By identifying these shifts, the system can flag potential changes in the operating environment that may affect the ML model's performance.

An active testing module 106 is configured to estimate performance based on the detected shifts identified by the shift detection module 105 and the stored embeddings in the vector database 104. The active testing module 106 employs various techniques to provide accurate performance estimates while minimizing the need for extensive manual labeling, for example by actively selecting the most informative instances for labeling, using techniques like importance sampling and uncertainty quantification.

To optimize the selection of data for processing, the system 100 incorporates an Instance Selection module 101. This module may select a subset of the input data without labels 110 for processing by the foundation model 103, either randomly or by using additional information from the ML model 102.

Additionally, the system 100 may include a copilot 130. The copilot 130 can serve as an interface between the active testing module 106 and an operator, facilitating tasks such as label acquisition and providing contextual information to support decision-making processes.

The Industrial System for Active Performance Estimation 100 integrates these components to create a comprehensive solution for monitoring and evaluating machine learning models in dynamic industrial environments. By leveraging advanced techniques such as foundation models and active testing, the system aims to maintain the reliability and efficiency of ML-based industrial applications. The Industrial System for Active Performance Estimation 100 receives and processes two types of data: input data without labels 110 and reference data with labels 112. The ML model 102 processes the input data without labels 110 to generate a prediction 120. This prediction 120 represents the output of the ML model 102 based on the current input data.

For the reference data with labels 112, the foundation model 103 generates embeddings, which are compact numerical representations of the data. These embeddings capture important features and relationships within the labeled data, providing a baseline for comparison. Similarly, the foundation model 103 generates embeddings for the input data without labels 110. This process allows the system to create comparable representations of both labeled and unlabeled data, facilitating further analysis and performance estimation.

An Instance Selection module 101 may be employed to select a subset of the input data without labels 110 for processing by the foundation model 103. This selection can be performed randomly via subsampling or by utilizing additional information from the ML model 102. In the latter case, the Instance Selection module 101 may increase the selection likelihood of certain instances based on the ML model's confidence in its predictions.

The choice of the foundation model 103 is based on the data modality of the input data without labels 110. For example, in industrial settings where sensor data is prevalent, a time series foundation model may be used for processing industrial sensor data. This specialized foundation model is designed to capture temporal dependencies and patterns in time-series data, which is common in many industrial applications.

The embeddings generated by the foundation model 103 for both the input data without labels 110 and the selected reference data with labels 112 are stored in the vector database 104. This storage allows for efficient retrieval and comparison of data representations during subsequent analysis steps.

The shift detection module 105 utilizes the stored embeddings to detect any significant changes in the data distribution between the input data without labels 110 and the reference data with labels 112. This detection process helps identify potential shifts in the operating environment that may affect the ML model's performance.

The active testing module 106 then uses the information from the shift detection module 105 and the stored embeddings to estimate the performance of the ML model 102. This estimation process considers the detected shifts and the characteristics of the current input data.

Throughout this process, the copilot 130 may provide assistance by facilitating communication between the system components and an operator system, if necessary. The copilot 130 can help interpret system outputs and guide operators in responding to any queries or alerts generated by the system.

The Industrial System for Active Performance Estimation 100 utilizes a foundation model 103 to generate embeddings for both the input data without labels 110 and the reference data with labels 112. These embeddings are compact numerical representations that capture important features and relationships within the data.

The foundation model 103 processes the input data without labels 110 and the reference data with labels 112 to create their respective embeddings. This process transforms the raw data into a format that can be efficiently compared and analyzed by the system.

Once the embeddings are generated, the Industrial System for Active Performance Estimation 100 stores these embeddings in a vector database 104. The vector database 104 is designed to efficiently store and retrieve high-dimensional vector representations, making it well-suited for handling the embeddings produced by the foundation model 103.

Storing the generated embeddings in the vector database 104 serves several purposes within the system. It allows for quick retrieval of the embeddings when needed for comparison or analysis. This efficient storage and retrieval mechanism is particularly beneficial for the shift detection module 105, which relies on comparing the embeddings of the input data without labels 110 to those of the reference data with labels 112.

The vector database 104 enables the active testing module 106 to access the stored embeddings for performance estimation purposes. By having a centralized repository of embeddings, the active testing module 106 can efficiently analyze the characteristics of both the current input data and the reference data to estimate the performance of the ML model 102.

The use of a vector database 104 for storing embeddings also allows for scalability as the amount of data processed by the Industrial System for Active Performance Estimation 100 grows over time. This scalability ensures that the system can handle increasing volumes of data without significant performance degradation.

The shift detection module 105 compares the embeddings of the input data without labels 110 with the embeddings of the reference data with labels 112, both of which are stored in the vector database 104.

To detect shifts in data distribution, the shift detection module 105 employs various statistical methods to quantify the differences between the embeddings. These methods may include:
1. Kolmogorov-Smirnov test: compares the cumulative distribution functions of the embeddings. This non-parametric test assesses whether two samples come from the same distribution.
2. Jensen-Shannon divergence: calculating the Jensen-Shannon divergence between the probability distributions of the embeddings measures the similarity between two probability distributions.
3. Wasserstein distance is also known as the Earth Mover's Distance. This metric quantifies the minimum "cost" of transforming one distribution into another.

By applying one or more of these statistical methods, the shift detection module 105 can identify significant changes in the data distribution between the input data without labels 110 and the reference data with labels 112. The shift detection module 105 may use predefined thresholds to determine when a detected shift is significant enough to warrant further action. When a significant shift is detected, the shift detection module 105 may trigger the active testing module 106 to re-evaluate the performance of the ML model 102. This process helps ensure that the Industrial System for Active Performance Estimation 100 can adapt to changes in the input data distribution and maintain accurate performance estimates for the ML model 102.

The active testing module 106 employs various techniques to provide accurate performance estimates while minimizing the need for extensive manual labeling. It estimates the performance of the ML model 102 based on the detected shifts identified by the shift detection module 105 and the stored embeddings in the vector database 104. To accomplish this, the active testing module 106 may construct pseudo-labels for the input data without labels 110 using a surrogate model or transportation-based techniques. One approach uses a surrogate model to estimate the performance of a target model on unlabeled data, actively selecting informative samples for labeling to improve the accuracy of the performance estimate while minimizing labeling costs.

A surrogate model is a computationally efficient approximation of a more complex model or system. It is designed to mimic the behavior of the original model while being faster to evaluate. Surrogate models are often used when the original model is too expensive or time-consuming to run repeatedly, such as in optimization, uncertainty quantification, or sensitivity analysis tasks. They can be constructed using various techniques, including polynomial regression, kriging, neural networks, or other machine learning methods, based on a limited number of evaluations of the original model. These pseudo-labels serve as approximations of the true labels, allowing the system to estimate performance without requiring actual labels for all input data.

To improve the accuracy of the performance estimate, the active testing module 106 selects specific instances from the input data without labels 110 for which obtaining labels would be most informative. This selection process may involve identifying instances with low prediction quality under the estimated pseudo-labels. By focusing on these challenging instances, the system can efficiently gather the most valuable information for refining its performance estimate.

Once the active testing module 106 has identified the specific instances for labeling, a labeling query 124 is generated. This labeling query 124 may be sent to an operator or another system capable of providing accurate labels for the selected instances.

In response to the labeling query 124, the Industrial System for Active Performance Estimation 100 receives labels 126 for the selected specific instances. These labels 126 provide ground truth information that can be used to validate and improve the performance estimate.

Upon receiving the labels 126, the active testing module 106 updates the performance estimate of the ML model 102. This update incorporates the newly acquired labeled data, allowing for a more accurate assessment of the model's current performance.

The active testing module 106 monitors the updated performance estimate. If the performance estimate falls below a given threshold value, the module outputs information to alert operators or other systems of the potential performance degradation. This output may trigger further actions, such as model retraining or adjustments to the industrial process.

Throughout this process, the copilot 130 may assist by facilitating the labeling query 124 and the receipt of labels 126. The copilot 130 can provide additional context or guidance to human operators, helping them understand the importance of the labeling task and ensuring accurate label provision.

By employing these active testing techniques, the Industrial System for Active Performance Estimation 100 can maintain an up-to-date and reliable estimate of the ML model's performance while minimizing the need for extensive manual labeling. This approach allows for efficient monitoring and maintenance of machine learning models in dynamic industrial environments. The Industrial System for Active Performance Estimation 100 may incorporate a copilot 130 to enhance the labeling process and provide additional support to operator systems. The copilot 130 serves as an interface between the active testing module 106 and operators, facilitating the exchange of information and improving the overall efficiency of the system.

One function of the copilot 130 is to facilitate the labeling query 124 and the receipt of labels 126. When the active testing module 106 generates a labeling query 124 for specific instances that require further input, the copilot 130 manages the communication of this query to the appropriate operator. The copilot 130 may present the labeling query 124 in a user-friendly format, making it easier for the operator to understand the task at hand.

Upon receiving the labeling query 124, the operator system can provide the requested labels 126 through the copilot 130 interface. The copilot 130 then ensures that these labels 126 are properly transmitted back to the active testing module 106 for processing and incorporation into the performance estimation.

In addition to facilitating the labeling process, the copilot 130 provides additional context or guidance for example to human operators when responding to the labeling query 124. This guidance may include:
- Explanations of the importance of accurate labeling for maintaining the performance of the ML model 102.
- Information about the specific data points or instances that require labeling, including relevant features or characteristics.
- Guidelines on how to interpret and label complex or ambiguous cases.
- Historical context or trends related to similar data points or instances.
- Suggestions based on the current state of the ML model 102 and the detected shifts in data distribution.

By providing this additional context and guidance, the copilot 130 helps ensure that the operators can make informed decisions when providing labels 126. This, in turn, improves the quality of the labels received and enhances the accuracy of the performance estimation performed by the active testing module 106.

The copilot 130 may also adapt its communication style and level of detail based on the expertise and preferences of individual operators. This personalized approach can help streamline the labeling process and reduce the cognitive load on operators, particularly in complex industrial environments where quick and accurate decision-making is crucial. Furthermore, the copilot 130 can aggregate and analyze the labeling patterns and responses from operators over time. This analysis may reveal insights into common challenges or areas where operators frequently require additional support. The copilot 130 can use these insights to refine its guidance and improve the overall efficiency of the labeling process.

In summary, the integration of the copilot 130 into the Industrial System for Active Performance Estimation 100 enhances the system's ability to obtain accurate labels while providing valuable support especially to human operators.

The Industrial System for Active Performance Estimation 100 can be implemented in various industrial settings to monitor and evaluate the performance of machine learning models in real-world applications.

In an industrial manufacturing plant e.g. producing automotive parts, the invention may be applied to monitor and maintain the performance of a machine learning model used for quality control inspection.

The ML model is initially trained to detect defects in manufactured parts using computer vision techniques. It processes images of parts coming off the production line and classifies them as defective or non-defective. However, over time, various factors can affect the model's performance, like changes in lighting conditions on the factory floor, wear and tear on manufacturing equipment producing slightly different defect patterns or introduction of new part designs or materials.

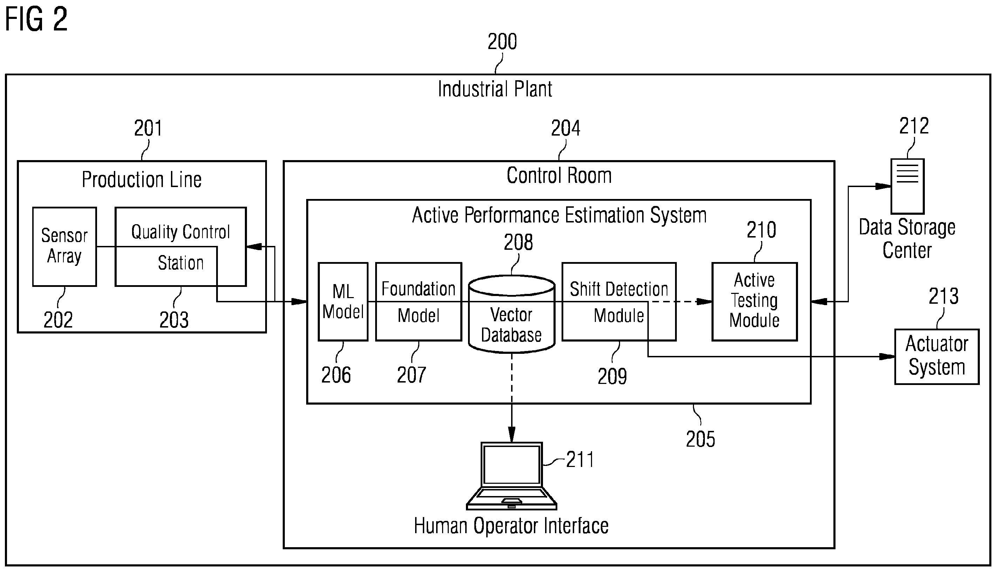

FIG. 2 illustrates an example implementation of an active performance estimation system 205 within an industrial plant 200.

An industrial plant 200 typically comprises multiple interconnected components and systems working together to achieve specific production goals. In the example shown in FIG. 2, the industrial plant 200 includes a production line 201, a control room 204, and various supporting systems.

A production line 201 is a key component of the industrial plant 200, where manufacturing or processing operations take place. The production line 201 may include a sensor array 202 and a quality control station 203. The sensor array 202 collects data from various points along the production line 201, providing input data without labels 110 for the active performance estimation system 205. A quality control station 203 may be used to monitor and assess the quality of products or processes, potentially providing additional data for analysis.

A control room 204 serves as the central hub for monitoring and managing the industrial plant 200 operations. Within the control room 204, an active performance estimation system 205 is implemented to continuously evaluate the performance of machine learning models used in the plant's operations.

The active performance estimation system 205 incorporates several components similar to those described in the Industrial System for Active Performance Estimation 100. These components include an ML model 206, a foundation model 207, a vector database 208, a shift detection module 209, and an active testing module 210.

The ML model 206 processes input data from the production line 201, generating predictions that may be used to optimize various aspects of the manufacturing process. The foundation model 207 generates embeddings for both the input data and reference data, which are then stored in the vector database 208.

The shift detection module 209 analyzes the embeddings to detect any significant changes in data distribution that may affect the ML model's performance. The active testing module 210 uses information from the vector database 208 and shift detection module 209 to estimate the ML model's performance and generate labeling queries when necessary.

An operator interface 211 is included, e. g. in the control room 204, allowing operators to interact with the active performance estimation system 205. This interface may be used to respond to labeling queries, review performance estimates, and make informed decisions based on the system's outputs.

To support the data-intensive operations of the active performance estimation system 205, a data storage center 212 is connected to the control room 204. This data storage center 212 provides storage and retrieval capabilities for the large volumes of data generated and processed by the system.

An actuator system 213 is also part of the industrial plant 200, receiving signals from the control room 204 to make adjustments in the production process based on the ML model's predictions and performance estimates. This allows for real-time optimization of the manufacturing process based on the insights provided by the active performance estimation system 205.

In some implementations, the active performance estimation system 205 may include an instance selection module configured to select a subset of the input data without labels for processing by the foundation model 207. This selection can be performed either randomly or by using additional information from the ML model 206. By selectively processing a subset of the input data, the system can maintain efficiency while still providing accurate performance estimates.

The implementation of the active performance estimation system 205 within the industrial plant 200 enables continuous monitoring and evaluation of machine learning models in a real-world industrial setting. This integration allows for timely detection of performance issues, efficient labeling processes, and data-driven decision-making to optimize plant operations. The Industrial System for Active Performance Estimation 100 operates through a continuous workflow that involves multiple interacting components to monitor and estimate the performance of the ML model 102 in an industrial setting. FIG. 1 illustrates the key components and their interactions within this system.

The workflow begins with the input data without labels 110, which may be collected from various sources such as the sensor array 202 on the production line 201 of the industrial plant 200, as shown in FIG. 2. This input data without labels 110 is processed by the ML model 102 to generate predictions 120, which may be used to control various aspects of the industrial process.

Simultaneously, the foundation model 103 processes both the input data without labels 110 and the reference data with labels 112 to generate embeddings. These embeddings are compact numerical representations of the data that capture important features and relationships. The vector database 104 stores these embeddings for efficient retrieval and comparison.

The shift detection module 105 continuously analyzes the embeddings stored in the vector database 104 to detect any significant changes in the data distribution between the input data without labels 110 and the reference data with labels 112. If a shift is detected, the shift detection module 105 signals the active testing module 106 to re-evaluate the performance of the ML model 102.

The active testing module 106 estimates the performance of the ML model 102 based on the detected shifts and the stored embeddings. To improve the accuracy of its performance estimate, the active testing module 106 may select specific instances from the input data without labels 110 for which obtaining labels would be most informative. The active testing module 106 then generates a labeling query 124 for these selected instances.

The labeling query 124 may be sent to an operator through the copilot 130, which can provide additional context or guidance to assist in the labeling process. The operator, who may be working in the control room 204 of the industrial plant 200, can then provide the requested labels 126 through the copilot 130 interface.

Upon receiving the labels 126, the active testing module 106 updates its performance estimate of the ML model 102. If the updated performance estimate falls below a predetermined threshold, the active testing module 106 may output this information to alert operators or trigger automated interventions.

In the context of the industrial plant 200 shown in FIG. 2, the active performance estimation system 205 integrates these components to continuously monitor and evaluate the ML model 206 used in the plant's operations. The system may interact with the data storage center 212 for storing and retrieving large volumes of data, and may send signals to the actuator system 213 to make adjustments in the production process based on the ML model's predictions and performance estimates.

A computer program may comprise instructions which, when executed by a computer, cause the computer to carry out the method of active performance estimation as described above. These instructions may include steps for processing input data, generating and comparing embeddings, detecting shifts in data distribution, estimating model performance, and generating labeling queries when necessary.

A computer-readable medium may comprise instructions which, when executed by a computer, cause the computer to carry out the method of active performance estimation. This computer-readable medium may store the instructions in a format that can be read and executed by a computer system, allowing for the implementation of the active performance estimation method in various computing environments.

A computer device may comprise a processor and a memory, wherein the memory comprises instructions stored thereon which, when executed by the processor, causes the computer device to perform the method of active performance estimation. This computer device may be configured to execute the instructions that implement the various components and steps of the active performance estimation system, allowing for real-time monitoring and evaluation of ML model performance in industrial settings.

The systems and methods described herein may be implemented in any form of computing or electronic device. The term "computer," as used herein, encompasses any device with processing capabilities sufficient to execute instructions. This includes, but is not limited to, personal computers, servers, mobile devices, personal digital assistants, and similar devices. Such devices may include one or more processors, such as microprocessors, controllers, or other suitable types of processors, capable of executing instructions to control the device's operation. For example, in some implementations using a system-on-a-chip architecture, the processors may include fixed-function blocks (hardware accelerators) that perform parts of the method in hardware rather than software or firmware. Platform software, such as an operating system or similar, may be installed to support the execution of application software.

The described functionality may be implemented in hardware, software, or any combination thereof. When implemented in software, the instructions or code can be stored on or transmitted via a computer-readable medium. Such media include computer-readable storage media, which may be volatile or non-volatile, removable or non-removable, and implemented using any technology for storing information such as program code, data structures, or other data. Examples include, but are not limited to, ROM, EEPROM, RAM, magnetic or optical storage, flash memory, or any other storage medium accessible by a computer. Communication media that facilitate the transfer of software, such as via coaxial cables, fiber optics, DSL, or wireless signals, may also be considered part of computer-readable media.

Alternatively, or in addition, some or all of the described functionalities may be implemented using hardware logic components. Examples include, but are not limited to, application-specific integrated circuits, system-on-a-chip systems, field-programmable gate arrays, application-specific standard products, and complex programmable logic devices. In some cases, software instructions may also be implemented in dedicated circuits, such as programmable logic arrays or digital signal processors.

The computing device may operate as a standalone system or as part of a distributed system, where tasks are performed collectively by multiple devices connected via a network. Such devices may communicate over a network connection to perform the described functionality. For instance, software may be stored on a remote computer and accessed by a local device, which may download and execute portions of the software as needed. Similarly, some instructions may be processed locally, while others may execute on remote systems or networks. In some cases, the computing device may be remote and accessible via a communication interface. Storage of program instructions may also be distributed across a network or stored in a combination of local and remote locations. For example, software may reside on a remote computer and be accessed by a local terminal, or the system may execute some software locally while other components operate on remote servers.

The performance estimate generated by the active performance estimation system serves several critical purposes in the industrial plant:
- Quality assurance: Plant managers use the performance estimate to ensure the ML model maintains a high level of accuracy in detecting defects. If the estimate indicates declining performance, it triggers a review of the quality control process.
- Maintenance scheduling: The estimate helps determine when the ML model requires retraining or fine-tuning. This allows for proactive maintenance of the Al system, scheduling updates during planned downtime to minimize production disruptions.
- Resource allocation: Based on the performance estimate, managers may adjust staffing levels for manual inspections. When the model performs well, fewer human inspectors may be needed, while a lower performance estimate may prompt increased human oversight.
- Process optimization: The estimate aids in identifying correlations between model performance and various production factors. This insight can drive improvements in manufacturing processes, lighting conditions, or data collection methods.
- Compliance and reporting: The continuously updated performance estimate provides documentation for regulatory compliance, demonstrating ongoing monitoring and maintenance of the quality control system.
- Decision support: In cases where the model's decisions have significant consequences, the performance estimate helps operators and managers calibrate their trust in the model's output, potentially triggering manual reviews for critical or borderline cases.
- Cost-benefit analysis: The estimate informs decisions about investing in model upgrades, additional sensors, or alternative inspection technologies by quantifying the current system's effectiveness.
- Continuous improvement: By tracking performance over time, the plant can measure the impact of various interventions and improvements, fostering a culture of data-driven continuous improvement in their Al-assisted manufacturing processes.

A bad performance estimate of the ML model in an industrial plant on the other hand can have several direct and potentially severe effects:
Increased defect rate: If the performance estimate is overly optimistic, it may lead to excessive reliance on a poorly performing model. This could result in defective parts being incorrectly classified as acceptable, leading to a higher rate of faulty products reaching customers.

Production inefficiencies: An inaccurate performance estimate may cause unnecessary production stoppages or slowdowns. If the estimate falsely indicates poor performance, managers might halt production lines for unnecessary model adjustments or manual inspections.

Resource misallocation: A bad estimate can lead to inefficient use of human resources. Overestimating model performance might result in reducing manual quality checks prematurely, while underestimating it could lead to unnecessary and costly over-staffing of inspection teams.

Delayed maintenance: If the performance estimate fails to detect actual degradation in model performance, necessary model updates or retraining may be delayed, prolonging the use of an underperforming system.

False alarms or missed issues: Inaccurate performance estimates may trigger false alarms about system issues, causing unnecessary panic and reactive measures. Conversely, they may fail to raise alerts about genuine problems, allowing issues to persist unaddressed.

Financial losses: All of the above can contribute to financial losses through increased scrap rates, warranty claims, customer returns, or inefficient use of resources.

Reputation damage: If defective products reach customers due to overreliance on a poorly estimated model, it can damage the company's reputation for quality and reliability.

Compliance risks: In heavily regulated industries, relying on inaccurately estimated model performance could lead to compliance violations if the actual performance falls below required standards.

Safety hazards: In cases where the ML model is part of a safety-critical system, such as detecting structural weaknesses in manufactured parts, a bad performance estimate could lead to overlooking serious defects, potentially creating safety hazards. Misguided strategic decisions: Long-term strategic decisions about technology investments, process changes, or even plant expansions may be based on faulty assumptions if performance estimates are consistently inaccurate.

These effects underscore the importance of having a reliable and accurate performance estimation system for ML models in industrial environments, highlighting the value of the proposed invention in maintaining efficient and effective operations.

### LIST OF ELEMENT LABELS

100 Industrial System for Active Performance Estimation
101 Instance Selection
102 ML model
103 foundation model
104 vector database
105 shift detection module
106 active testing module
110 input data without labels
112 reference data with labels
120 prediction
122 performance estimation
124 labeling query
126 labels
130 copilot
200 industrial plant
201 production line
202 sensor array
203 quality control station
204 control room
205 active performance estimation system
206 ML model
207 foundation model
208 vector database
209 shift detection module
210 active testing module
211 human operator interface
212 data storage center
213 actuator system

## Claims

1. A computer-implemented method (100) for actively testing and estimating the performance of a machine learning model in industrial environments, the method comprising:
receiving input data without labels (110) and processing the input data without labels (110) using a machine learning (ML) model (102) to generate predictions (120);
receiving reference data with labels (112) and generating embeddings for the reference data with labels (112), using a foundation model (103),
generating embeddings for input data without labels (110) using the foundation model (103), and
detecting (105) shifts in data distribution by comparing the embeddings of the input data without labels (110) with the embeddings of the reference data with labels (112);
estimating (106) the performance of the ML model (102) on input data without labels based on the detected shifts and the stored embeddings and
selecting (106) specific instances from the input data without labels (110) for which obtaining labels would be most informative for improving the performance estimate;
generating a labeling query (124) for the selected specific instances;
receiving labels (126) for the selected specific instances in response to the labeling query (124); and
updating the performance estimate of the ML model (102) based on the received labels (126) and
Outputting of information as soon as performance estimate has fallen below a given threshold value.

2. The method of claim 1, wherein the generated embeddings are stored in a vector database (104).

3. The method of claim 1 or 2, wherein the method further comprises:
selecting (101), a subset of the input data without labels (110) for processing by the foundation model (103) either randomly or by using additional information from the Machine learning model.

4. The method of any of claims 1 to 3, wherein detecting shifts in data distribution comprises:
applying at least one of a Kolmogorov-Smirnov test, Jensen-Shannon divergence, or Wasserstein distance to compare the embeddings of the input data without labels (110) with the embeddings of the reference data with labels (112).

5. The method of any of claims 1 to 4, wherein estimating the performance of the ML model (102) comprises:
constructing pseudo-labels for the input data without labels (110) using a surrogate model or using transportation-based techniques.

6. The method of any of claims 1 to 5, wherein selecting specific instances for labeling comprises:
identifying instances with low prediction quality under estimated pseudo-labels.

7. The method of any of claims 1 to 6, wherein the method further comprises:
interfacing with a copilot (130) to facilitate the labeling query (124) and receipt of labels (126).

8. The method of claim 7, wherein interfacing with the industrial copilot (130) further comprises:
providing, via the copilot (130), additional context or guidance to a human operator for responding to the labeling query (124).

9. The method of any of claims 1 to 8, wherein the foundation model (103) is selected based on the data modality of the input data without labels (110).

10. The method of claim 9, wherein the foundation model (103) is a time series foundation model for processing industrial sensor data.

11. An industrial system for active performance estimation (100), comprising:
a machine learning (ML) model (102) configured to process input data without labels (110) to generate predictions (120),
a foundation model (103) configured to generate embeddings for both the input data without labels (110) and reference data with labels (112),
a shift detection module (105) configured to detect shifts in data distribution by comparing the embeddings of the input data without labels (110) with the embeddings of the reference data with labels (112),
an active testing module (106) configured to
• estimate performance of the ML model (102) based on the detected shifts and the stored embeddings,
• select specific instances from the input data without labels (110) for which obtaining labels would be most informative for improving the performance estimate,
• generate a labeling query (124) for the selected specific instances, and
• update the performance estimate of the ML model (102) based on labels (126) received in response to the labeling query (124)
• output information as soon as performance estimate has fallen below a given threshold value.

12. The system of claim 11, further comprising
a vector database (104) configured to store the generated embeddings.

13. The system of claim 11 or 12, further comprising:
an instance selection module (101) configured to select a subset of the input data without labels (110) for processing by the foundation model (103) either randomly or by using additional information from the Machine learning model.

14. The system of any of claims 11 to 13, wherein the shift detection module (105) is further configured to:
apply at least one of a Kolmogorov-Smirnov test, Jensen-Shannon divergence, or Wasserstein distance to compare the embeddings of the input data without labels (110) with the embeddings of the reference data with labels (112).

15. The system of any of claims 11 to 14, wherein the active testing module (106) is further configured to:
construct pseudo-labels for the input data without labels (110) using a surrogate model or using transportation-based techniques.

16. The system of any of claims 11 to 15, further comprising:
an industrial copilot (130) configured to facilitate the labeling query (124) and receipt of labels (126).

17. The system of claim 16, wherein the industrial copilot (130) is further configured to:
provide additional context or guidance to a human operator for responding to the labeling query (124).

18. The system of any of claims 11 to 17, wherein the foundation model (103) is selected based on the data modality of the input data without labels (110).

19. The system of claim 19, wherein the foundation model (103) is a time series foundation model for processing industrial sensor data.

20. A computer program comprising instructions which, when executed by a computer, cause the computer to carry out the method of any of claims 1 to 10.

21. A computer-readable medium comprising instructions which, when executed by a computer, cause the computer to carry out the method of any of claims 1 to 10.

22. A computer device comprising a processor and a memory, wherein the memory comprises instructions stored thereon which, when executed by the processor, causes the computer device to perform the method of any of claims 1 to 10.
